# EUROPÄISCHE PATENTSCHRIFT

(11) **EP 2 937 221 B1**
(45) Veröffentlichungstag und Bekanntmachung des Hinweises auf die Patenterteilung: **01.06.2016**
(21) Anmeldenummer: 14165828.6
(22) Anmeldetag: 24.04.2014
(51) Int. Cl.: B41M 5/00

(54) **Verfahren zur Anpassung von Dekordrucken und eine Vorrichtung zur Durchführung dieses Verfahrens**
Method for adapting decorative prints and device for carrying out said method
Procédé destiné à adapter des impressions décoratives et dispositif destiné à l'exécution du procédé

(43) Veröffentlichungstag der Anmeldung: 28.10.2015
(73) Patentinhaber: Flooring Technologies Ltd., Pieta PTA 9044 (MT)
(72) Erfinder: Dr. Kalwa, Norbert, 32805 Horn-Bad Meinberg (DE); Skorzik, Timo, 99867 Gotha (DE)
(74) Vertreter: Maikowski & Ninnemann

(56) Entgegenhaltungen:
- WO-A1-03/084760
- WO-A1-2013/165307
- US-A1- 2012 251 787

## Beschreibung

Die vorliegende Erfindung betrifft ein Verfahren zur Anpassung von Dekordrucken nach Anspruch 1 und eine Vorrichtung zur Durchführung dieses Verfahrens nach Anspruch 13.

### Beschreibung

Mit einem Dekor versehene Trägermaterialien, wie z.B. Holzwerkstoffplatten, werden typischerweise als Bodenbelagselemente oder zur Verkleidung von Wänden und Decken verwendet. Hierzu wurden in der Vergangenheit die als Trägermaterialien verwendeten Holzwerkstoffplatten meist mit einem Dekorpapier beschichtet, wobei der Vielfältigkeit an verschieden gemusterten Dekorpapieren keine Grenzen gesetzt waren bzw. sind.

Als Alternative zur Verwendung von Dekorpapieren auf Holzwerkstoffplatten hat sich in der Vergangenheit das direkte Bedrucken von Holzwerkstoffplatten als Trägermaterialien entwickelt, da ein Bedrucken von Papier und dessen nachträgliches Kaschieren oder Direktbeschichten auf die Holzwerkstoffplatte entfällt.

Die hierbei hauptsächlich zum Einsatz kommenden Drucktechniken sind das Tiefdruck- und das Digitaldruckverfahren. Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand wie z.B. ein Trägermaterial übertragen. Beim Digitaldruck hingegen wird das Druckbild direkt von einem Computer in eine Druckmaschine wie z.B. einem Laser- oder Tintenstrahldrucker übertragen. Dabei entfällt die Verwendung einer statischen Druckform.

US 2012/0251787 betrifft eine Bauplatte, die ein anorganisches Basismaterial umfasst und eine Vielzahl von Holzplattenmurtern aufweist.

Im Rahmen der technischen Weiterentwicklung der Drucktechnologie von verschiedensten Trägermaterialien wird jedoch mehr und mehr auf den Digitaldruck gesetzt. Während digitale Druckverfahren zunächst vor allem in der graphischen Industrie wie z.B. Werbeagenturen, Werbemittelhersteller oder Druckereien Anwendung fanden, zeigt sich mittlerweile, dass digitale Druckverfahren auch häufiger in anderen Industriezweigen anzutreffen sind. Hierfür gibt es zwar vielfältige Gründe, wobei sich jedoch zwei wesentliche Argumente erkennen lassen. So ermöglicht der Digitaldruck die Herstellung eines Druckbildes mit einer besonders hohen Qualität durch eine höhere Auflösung und erlaubt des Weiteren ein breiteres Anwendungsspektrum bei hoher Flexibilität.

Digitales Drucken wird heute fast ausschließlich unter Verwendung des Farbsystems CMYK durchgeführt. Das CMYK Farbmodell ist ein subtraktives Farbmodell, wobei die Abkürzung CMYK für die drei Farbbestandteile Cyan, Magenta, Yellow (gelb) und den Schwarzanteil Key als Farbtiefe steht. Mit diesem Farbsystem lässt sich ein Farbraum (Gamut) abbilden, der vielen Anforderungen aus verschiedensten Bereichen genügt.

Weiterhin sollen Produkte durch Massenfertigung einerseits preiswerter werden und andererseits wird von den Kunden eine größere Vielfalt erwartet, die sich beispielsweise in einer nahezu unendlichen Dekorvielfalt spiegelt. Ein erhebliches Problem ist dabei eine Vorhersage, die ein Hersteller z. B. von dekorativen Oberflächen für Gebrauchsgegenstände wie Laminatböden zu treffen hat, hinsichtlich der Frage, welche neuen Dekore von Kunden akzeptiert werden und welche nicht.

Bei der Neugestaltung einer Kollektion muss ein Hersteller von dekorativen Platten von jedem Dekor eine Mindestmenge an bedrucktem Dekorpapier oder bedruckter Finishfolie abnehmen. Die Mindestmenge bei Papier liegt üblicherweise im Rahmen von etwa einer Tonne, was etwa 15.000 m² entspricht. Dieses Dekorpapier muss anschließend imprägniert, auf Trägerplatten aufgepresst und weiter bearbeitet werden. Wenn nun genau dieses Dekor am Markt keinen Erfolg hat, entstehen auf allen Wertschöpfungsstufen Restmengen, die nicht mehr verwendet werden können. Die daraus entstehenden Kosten sind erheblich. Zudem wurde die Farbstellung des Dekors zumindest für die eine Tonne Papier festgelegt.

Eine Möglichkeit, dieses Problem zu lösen, wäre die Erzeugung aller Dekore ausschließlich mittels Digitaldruck. Dies hat dann jedoch den gravierenden Nachteil, dass diese Dekore in Bezug auf die Druckkosten erheblich teurer sind. Darüber hinaus könnte das höhere Qualitätsniveau der Dekore durch die höhere Auflösung des Digitaldrucks andere, nicht digital gedruckte Dekore abwerten und somit zu einer Umsatzeinbuße von herkömmlich bedruckten Trägermaterialen führen.

Ein sich weiter verstärkender Trend besteht in den immer kleiner werdenden Losgrößen. Auch diesem Trend kann die Digitaldrucktechnologie prinzipiell Rechnung tragen. Durch die hohe Flexibilität des Digitaldrucks ist es nicht nur möglich Papier oder Folienbahnen, sondern auch direkt Trägerplatten, wie z.B. Holzfaserplatten, zu bedrucken. Damit können auf dem Weg der Weiterveredelung zu Halbfertig- oder Fertigprodukten, wie beispielsweise Möbelplatten, Laminatböden oder Fassadenplatten einige Wertschöpfungsstufen übersprungen werden, was in einer weiteren Flexibilisierung und Vereinfachung der Fertigungsprozesse mündet.

Insbesondere in der Holzwerkstoffindustrie hat man bisher nahezu ausschließlich dekorative Oberflächen über den indirekten Tiefdruck auf Dekorpapieren erzeugt und hatte damit zunehmend mit Losgrößen-Problemen zu kämpfen.

Einen Ausweg bietet hier der Digitaldruck. Dieser wird gegenwärtig fast ausschließlich, wie der indirekte Tiefdruck, auf Dekorpapier oder auf Vorimprägnaten, wie z.B. vorbeharzten Papieren, propagiert. Dabei kommen vorwiegend Tinten auf Wasserbasis zum Einsatz, die auch nach dem Druck und der sich anschließenden Trocknung noch eine gewisse Wasserlöslichkeit besitzen. Da bei der sich anschließenden Erzeugung der dekorativen Oberflächen zumindest bei den Dekorpapieren noch eine Imprägnierung mit wasserlöslichen Harzen vorgenommen werden muss, gefolgt von einer Verpressung in einer Kurztakt-Presse, wird die hohe Auflösung durch das Anlösen der Farben partiell verschlechtert oder zerstört.

Das direkte Drucken auf eine, wenn nötig vorgrundierte, Trägerplatte, vorzugsweise eine Holzwerkstoffplatte, mittels Digitaldruck wäre daher eine erstrebenswerte Lösung.

Bei der Realisierung dieser Lösung sind aber mehrere Hindernisse zu überwinden.

Die zum indirekten Tiefdruck eingesetzten Dekorpapiere besitzen wegen ihrer relativ hohen Pigmentbeladung eine gute Deckkraft. Damit soll die Eigenfarbe des Trägers weitgehend eliminiert werden. Alternativ kann eine Grundierung direkt auf eine Trägerplatte aufgetragen werden. Wenn eine Grundierung direkt auf eine Trägerplatte, vorzugsweise eine Holzwerkstoffplatte, aufgebracht wird, darf die Grundierung auf der Trägerplatte nicht zu dick ausgeführt werden, da sonst die später aufgetragenen Schutzschichten, vorzugsweise Kunstharze, die Grundierung nicht mehr durchdringen können und damit nach einer Verpressung in der Kurztakt-Presse Delaminierungen oder Blasen auftreten können.

Andererseits darf die Grundierung auch nicht zu dünn ausgeführt werden. Es besteht dann die Gefahr, dass der Träger nicht vollständig abgedeckt wird, was sich negativ auf den Gesamtfarbeindruck des Dekors auswirkt.

Ein weiteres Problem besteht darin, dass einzelne Chargen der Trägermaterialien Schwankungen in ihren Eigenschaften haben, was u. a. zu Unterschieden in der Helligkeit und/oder der Farbe der Trägerplatten führen kann. Dadurch können nach dem Aufdrucken der Dekore sichtbare Unterschiede, insbesondere Farbabweichungen, zwischen den einzelnen Produkt-Chargen auftreten.

Es wurde zunächst versucht, dieses Problem durch Aufbringen von mehreren Schichten einer weißen Grundierung auf die Trägermaterialien zu lösen. Die weiße Grundierung kann beispielsweise mit einer oder mehreren Walzenauftragsmaschinen auf die Trägermaterialien aufgebracht werden. Die Anzahl der Schichten der weißen Grundierung beträgt vorzugsweise bis zu sechs Schichten. Für den nachfolgenden Aufdruck von hellen Dekoren ist es notwendig, eine möglichst helle Grundierung, vorzugsweise eine weiße Grundierung auf die Trägermaterialien aufzubringen. Die verwendeten weißen Grundierungen besitzen als Pigmente meist Weißpigmente wie Titandioxid. Für dunkle Dekore, wie beispielsweise Mooreiche oder Mahagoni, kann auch eine gelbe bis hellbraune Grundierung aufgetragen werden. Dazu sind als Pigmente beispielsweise Titandioxid und/oder Eisenoxid in der Grundierung enthalten.

Die Grundierungen für den Direktdruck auf Trägermaterialien erreichen trotzdem nicht das gleiche Qualitätsniveau wie das eines herkömmlichen Dekorpapiers. Insbesondere bei weißen Grundierungen war eine größere Wolkigkeit und/oder eine geringere Deckkraft zu beobachten, wodurch das zu bedruckende Trägermaterial durchscheint. Der Prozess zur Erlangung eines einheitlichen Weißgrades, insbesondere innerhalb einer Platte des Trägermaterials, ist nur schwer steuerbar und nach dem Aufbringen des Dekors ergeben sich Abweichungen im Druckbild, die zu Ausschuss führen. Es ist deshalb eine sehr aufwändige visuelle Prüfung der Trägermaterialien nach dem Aufbringen der insbesondere weißen Grundierung notwendig. Weiße Grundierungen müssen aber in den meisten Fällen verwendet werden, weil sie insbesondere bei hellen Dekoren für die gewünschte Brillanz sorgen. Der Anteil von hellen Dekoren ist aber gerade bei Fußbodenkollektionen relativ hoch.

Der Erfindung liegt daher die technische Aufgabe zu Grunde, großformatige Trägermaterialien, wie beispielsweise Holzwerkstoffplatten, so zu grundieren, dass Abweichungen des Weißgrades innerhalb einer Platte weitgehend vermieden werden und deren nachfolgende Dekorierung ohne sichtbare Abweichungen des Druckbildes von Platte zu Platte ausführbar ist. Der technische bzw. kostenmäßige Aufwand soll dabei so gering wie möglich sein. Auch der Prozess soll sich nicht wesentlich von dem Standardprozess unterscheiden.

Diese Aufgabe wird erfindungsgemäß durch ein Verfahren mit den Merkmalen des Anspruchs 1 und eine Vorrichtung zur Durchführung dieses Verfahrens mit den Merkmalen des Anspruchs 13 gelöst.

Entsprechend wird ein Verfahren zur Erzeugung von Dekordrucken mit gleicher Qualität auf Trägermaterialien zur Verfügung gestellt, deren Helligkeit und oder Farbe Schwankungen unterliegen, wobei eine gleichbleibende Qualität, insbesondere Farbe, der Dekordrucke unabhängig von Schwankungen in der Helligkeit und/oder der Farbe der Trägermaterialien erzielt wird.

Farbabweichungen im Druckmotiv der mittels Digitaldruck gedruckten Dekore treten im Produktionsprozess insbesondere nach dem Wechsel von einer Charge des Trägermaterials zu einer neuen Charge des Trägermaterials auf. Farbabweichungen können aber auch zwischen einzelnen oder mehreren Trägerplatten der gleichen Charge des Trägermaterials auftreten. Ebenso, wie oben bereits beschrieben, können Farbabweichungen aber auch innerhalb einer Platte des Trägermaterials auftreten, wenn die weiße Grundierung ungenügend ausgeführt worden ist oder wenn die weiße Grundierung nicht ausreichend ist, um die auf der Oberfläche einzelner Trägerplatten auftretenden Farbunterschiede auszugleichen.

Zur Korrektur von Farbabweichungen zwischen den Trägerplatten von verschiedenen Chargen des Trägermaterials werden in dem erfindungsgemäßen Verfahren zunächst die Farbwerte der Trägerplatten mindestens einer ersten Charge des Trägermaterials kontinuierlich gemessen und an ein Computerprogramm weitergegeben. Bei Wechsel der Charge des Trägermaterials werden die Farbwerte der Trägerplatten mindestens einer weiteren Charge des Trägermaterials kontinuierlich gemessen und ebenfalls an das Computerprogramm weitergegeben. Die Farbwerte der Trägerplatten der mindestens einen ersten Charge und der mindestens einen weiteren Charge des Trägermaterials werden in dem Computerprogramm verarbeitet Beim Auftreten von Farbabweichungen zwischen den Trägerplatten der mindestens einen ersten Charge und mindestens einer weiteren Charge des Trägermaterials werden die Farbwerte des Digitaldrucks für die Dekore der mindestens eine weitere Charge und/oder der mindestens einen ersten Charge des Trägermaterials angepasst. Dadurch wird sichergestellt, dass keine Farbabweichungen zwischen den gedruckten Dekoren der mindestens einen ersten Charge des Trägermaterials und jeder weiteren Charge des Trägermaterials auftreten.

Das in dem vorliegenden Verfahren verwendete Trägermaterial kann ausgewählt sein aus einer Gruppe enthaltend Papier, Glass, Metall, Folien, Holzwerkstoffe, insbesondere MDF- oder HDF-Platten, Furniere, Lackschichten, Kunststoffplatten und anorganische Trägerplatten, wie z:B. Zementspan-, Zementfaser- und Gipsfaser-Platten.

Vorzugsweise kommen Holzwerkstoffplatten, insbesondere Holzfaserwerkstoffplatten zum Einsatz.

Erfindungsgemäß wird deshalb ein Verfahren zum Bedrucken von Holzwerkstoffplatten, insbesondere von Holzfaserwerkstoffplatten, mittels eines Digitaldruckverfahrens bereitgestellt.

Vorzugsweise erfolgt die Messung der Farbwerte in dem erfindungsgemäßen Verfahren kontinuierlich.

In einer Ausführungsform des vorliegenden Verfahrens wird auf die zu bedruckende Seite der Holzwerkstoffplatte vor dem Bedrucken mindestens eine Grundierungsschicht umfassend mindestens ein Harz und/oder mindestens einen Lack aufgetragen, die anschließend angetrocknet und/oder angehärtet wird.

Vorzugsweise wird die zu bedruckende Seite der Holzwerkstoffplatte vor dem Auftragen der Grundierung angeschliffen.

Zur Grundierung kann eine wässrige Harzlösung und/oder eine strahlenhärtbare Spachtelmasse auf die zu bedruckende Seite des Trägermaterials aufgetragen werden. Als Grundierungsmittel sind z.B. wässrige Harzlösungen wie Melamin-Formaldehyd-Harz, Harnstoff-Formaldehyd-Harz oder Melamin-Harnstoff-Formaldehyd-Harz einsetzbar. Es ist ebenfalls möglich, das Trägermaterial mit 1 K/2K-Acrylat-, UV- und/oder ESH-Spachtel vorzubeschichten bzw. zu grundieren und anschließend diese Grundierungsschicht entsprechend auszuhärten.

Vorzugsweise wird für die Vorbeschichtung bzw. Grundierung der Holzwerkstoffplatte eine wässrige Harzlösung verwendet, insbesondere eine wässrige Lösung eines Melamin-Formaldehyd-Harzes, Harnstoff-Formaldehyd-Harzes oder Melamin-Harnstoff-Formaldehyd-Harzes.

Die Auftragsmenge an flüssiger Harzlösung zur Grundierung kann zwischen 10 und 80 g/m², bevorzugt 20 und 50 g/m² betragen. Der Feststoffgehalt der wässrigen Harzlösung liegt zwischen 30 und 80%, bevorzugt 40 und 60%, insbesondere bevorzugt bei 55%. Das Flüssigharz kann zusätzlich geeignete Netzmittel, Härter, Trennmittel und Entschäumer aufweisen.

Nach Auftragen der wässrigen Harzlösung auf die Holzwerkstoffplatte zur Vorbeschichtung bzw. Grundierung derselbigen wird das Flüssigharz auf eine Feuchte von 10%, bevorzugt 6% z.B. in einem Konvektionsofen oder Nahinfrarot-Ofen getrocknet.

In einer anderen Ausführungsform des vorliegenden Verfahrens kann die Holzwerkstoffplatte mit 1 K/2K-Acrylat-, und/oder ESH-Spachtel vorbeschichtet bzw. grundiert werden. Eine UV-Spachtelmasse besteht vorteilhafterweise im Wesentlichen aus UV-härtbaren Lackkomponenten, Pigmenten, Reaktiwerdünner und Radikalbildnern als Kettenstarter.

Die Auftragsmenge der Spachtelmasse kann in diesem Fall 25 bis 150 g/m², bevorzugt 30 bis 100 g/m² betragen. Die Mengenangaben beziehen sich dabei auf eine 100%ige Spachtelmasse.

Ebenfalls ist es möglich, dass die zur Grundierung verwendete Spachtelmasse pigmentiert vorliegt, wodurch das Druckergebnis variiert oder verbessert werden kann.

Besonders bevorzugt gemäß der Erfindung ist die Vorbeschichtung der Holzwerkstoffplatte mit einer transparenten Grundierung.

In einer weiteren Ausführungsform des vorliegenden Verfahrens wird vor dem Bedrucken der mindestens einen Seite der Holzwerkstoffplatte mindestens eine Schicht einer pigmentierten Grundierung, die vorzugsweise wasserbasiert ist, auf die zu bedruckende Seite der Holzwerkstoffplatte aufgetragen. Die pigmentierte Grundierung kann entweder direkt auf die unbehandelte Oberfläche der Werkstoffplatte oder auch auf die vorherige, vorzugsweise transparente Grundierung aufgetragen werden.

Die wasserbasierte pigmentierte Grundierung kann auch in mehr als einer Schicht aufgetragen werden (z.B. 3 bis 10 Schichten, bevorzugt 5 bis 8 Schichten, besonders bevorzugt 6 oder 7 Schichten), wobei nach jedem Schichtauftrag die pigmentierte Grundierung z.B. in einem Konvektionstrockner oder einem Nahinfrarot-Trockner getrocknet wird. Die wasserbasierte pigmentierte Grundierung enthält vorzugsweise mindestens ein Pigment einer hellen Farbe, insbesondere mindestens ein Weißpigment.

Weißpigmente sind unbunte anorganische Pigmente mit einem hohen Brechungsindex (größer als 1,8), die vor allem zur Erzeugung von optischer Weiße in Anstrichmitteln oder als Füllstoff in z. B. Kunststoffen verwendet werden. Weißpigmente gemäß der Erfindung können ausgewählt sein aus der Gruppe umfassend Titandioxid, Lithopone, Bariumsulfat, Zinkoxid, Zinksulfid und Calciumsulfat. Lithopone ist ein Weißpigment, das Bariumsulfat und Zinksulfid beinhaltet.

Das erfindungsgemäße Verfahren ist besonders umweltfreundlich, da als Weißpigmente keine Verbindungen eingesetzt werden, die giftige Schwermetalle enthalten.

Gemäß der Erfindung wird vorzugsweise Titandioxid als Weißpigment in der wasserbasierten pigmentierten Grundierung eingesetzt, da Titandioxid den höchsten Brechungsindex und somit die höchste Deckkraft unter den bekannten Weißpigmenten aufweist.

Durch das Auftragen einer wasserbasierten pigmentierten Grundierung, die Weißpigmente enthält, auf Holzwerkstoffplatten können jedoch Farbunterschiede zwischen den Platten verschiedener Chargen, insbesondere aber zwischen verschiedenen Bereichen auf der Oberfläche einer Holzwerkstoffplatte nicht immer zuverlässig vermieden werden.

In einer bevorzugten Ausführungsform der Erfindung wird deshalb eine Schicht der wasserbasierten pigmentierten Grundierung als graue Farbgrundierung ausgeführt. Besonders bevorzugt ist es, wenn die pigmentierte graue Farbgrundierung vor dem Auftragen einer oder mehrerer weiterer pigmentierter Grundierungsschichten von weißer Farbe auf die Holzwerkstoffplatte aufgetragen wird.

Dadurch wird eine höhere Opazität und Homogenität der Grundierung auf der Holzwerkstoffplatte erzeugt, was zu einer verbesserten farblichen Übereinstimmung des nachfolgend aufgetragenen Dekors über den gesamten Plattenbereich führt.

Opazität bedeutet "Undurchsichtigkeit". Die Opazität der Grundierung ist hoch, wenn die Grundierung nicht durchscheinend ist, d.h. wenn die Farbe des Materials des Holzwerkstoffes nicht durch die Grundierung hindurch zu erkennen ist. Die Opazität lässt sich durch die Farbigkeit und Dicke der Grundierung beeinflussen.

Eine wasserbasierte pigmentierte Grundierung in grauer Farbe kann auf einfache Weise erzeugt werden, beispielsweise indem der wasserbasierten pigmentierten Grundierung, die ein oder mehrere Weißpigmente enthält, schwarze Druckfarbe zugemischt wird, wobei die schwarze Druckfarbe vorzugsweise wasserbasiert ist. Verschiedene Graustufen, bezogen auf die Helligkeit der grauen Farbgrundierung, sind ebenfalls auf einfache Weise erzeugbar, indem die Menge der zugemischten schwarzen Druckfarbe variiert wird. Je nach den Anforderungen werden der wasserbasierten pigmentierten Grundierung, die ein oder mehrere Weißpigmente enthält, 1 bis 700 g/l schwarze Druckfarbe beigemischt. Vorzugsweise werden der wasserbasierten pigmentierten Grundierung, die ein oder mehrere Weißpigmente enthält, 1 bis 600 g/l; 1 bis 500 g/l, 1 bis 400 g/l, 1 bis 300 g/l, 1 bis 200 g/l oder 1 bis 100 g/l schwarze Druckfarbe beigemischt. In einer weiteren bevorzugten Ausführungsform werden der wasserbasierten pigmentierten Grundierung, die ein oder mehrere Weißpigmente enthält, 1 bis 90 g/l, 1 bis 80 g/l, 1 bis 70 g/l, 1 bis 60 g/l, 1 bis 50 g/l, 1 bis 40 g/l, 1 bis 30 g/l, 1 bis 20 g/l oder 1 bis 10 g/l schwarze Druckfarbe beigemischt. Grundsätzlich sind alle wasserbasierten grauen Farben, die mittels eines Tintenstrahldruckers druckbar sind, für die Verwendung in dem erfindungsgemäßen Verfahren geeignet.

Die Beurteilung der Gleichmäßigkeit der Grundierung erfolgt durch Bestimmung der Farbabweichungen mittels Farbmessung nach dem Auftragen einer oder mehrerer Schichten der pigmentierten Grundierung.

Zur Bestimmung von Farbabweichungen wir der Farbabstand (*ΔE*) herangezogen. Der Farbabstand (*ΔE*) gibt den Unterschied zwischen zwei Farben an. Mathematisch betrachtet ist der Farbabstand die im CIE-Farbraum vorhandene kürzeste Verbindung zwischen zwei Farborten (DIN 5033-2, 1992). Ein Farbort kann jeder Farbe mit Hilfe der Normfarbtafel und einem Farbmaßsystem zugeordnet werden. Ist der Farbabstand bekannt, kann eine eindeutige Aussage darüber getroffen werden, wie stark sich zwei Farben voneinander unterscheiden. Der Farbabstand kann mit herkömmlichen, physikalischen Methoden bestimmt werden. Es kommt aber hauptsächlich auf die Wahrnehmbarkeit von Farbunterschieden durch den Menschen an.

Vorzugsweise wird das erfindungsgemäße Verfahren so durchgeführt, dass nur tolerierbare Farbabweichungen zwischen den gedruckten Dekoren der Holzwerkstoffplatten der mindestens einen ersten Charge und jeder weiteren Charge bzw. der mindestens einen ersten Holzwerkstoffplatte und jeder weiteren Holzwerkstoffplatte auftreten.

Gemäß der vorliegenden Erfindung sind Farbabweichungen zwischen den gedruckten Dekoren der Holzwerkstoffplatten der mindestens einen ersten Charge und jeder weiteren Charge bzw. der mindestens einen ersten Holzwerkstoffplatte und jeder weiteren Holzwerkstoffplatte dann tolerierbar, wenn der Farbabstand (*ΔE*) vom Menschen nicht als unterschiedlich wahrgenommen wird oder nur sehr gering ist. Vorzugsweise sind die Farbabweichungen in einem Bereich, der vom Menschen nicht wahrgenommen wird. In einer weiter bevorzugten Ausführungsform wird das erfindungsgemäße Verfahren demnach so durchgeführt, dass nur geringe Farbabweichungen zwischen den gedruckten Dekoren der Holzwerkstoffplatten der mindestens einen ersten Charge und jeder weiteren Charge bzw. der mindestens einen ersten Holzwerkstoffplatte und jeder weiteren Holzwerkstoffplatte auftreten. In einer besonders bevorzugten Ausführungsform wird das erfindungsgemäße Verfahren so durchgeführt, dass die Farbabweichungen zwischen den gedruckten Dekoren der Holzwerkstoffplatten der mindestens einen ersten Charge und jeder weiteren Charge bzw. der mindestens einen ersten Holzwerkstoffplatte und jeder weiteren Holzwerkstoffplatte ein und derselben Charge so gering sind, dass sie vom Menschen kaum wahrnehmbar sind.

Der Eindruck eines Dekors und damit die Wahrnehmbarkeit von Farbunterschieden kann bei verschiedenen Betrachtern variieren. Deshalb kommt es darauf an, bei der Bewertung von Farbunterschieden durch einen Fachmann möglichst viele äußere Einflüsse auszuschließen und die Bewertung von Farbunterschieden dadurch möglichst objektiv zu gestalten. Dies kann beispielsweise dadurch erreicht werden, dass die Bewertung von Farbunterschieden unter genormten Bedingungen in einer wiederholbaren Art und Weise durchgeführt wird.

Eine solche, dem Fachmann bekannte genormte Bewertung von Farbunterschieden kann beispielsweise umfassen
- die vergleichende Betrachtung der bedruckten Holzwerkstoffplatten,
- in einer verdunkelten Messkabine unter Ausschluss von einfallendem Störlicht von außen,
- bei genormtem Licht (z.B. einer genormte Lichtfarbe usw.),
- aus einer definierten Entfernung, und
- eine Wahlmöglichkeit, von einem genormten Licht auf ein anderes genormtes Licht umzustellen.

Um weitere Unwägbarkeiten, wie die subjektive Wahrnehmung und deren Wertung, die von Fachkenntnissen einerseits und hauptsächlich von Erfahrungen und Training des Betrachters andererseits abhängt, auszuschließen, kommt es weiterhin darauf an, den Fachmann, der die vergleichende Betrachtung der bedruckten Holzwerkstoffplatten zur Bewertung von Farbunterschieden durchführt, hinreichend zu trainieren.

In einer besonders bevorzugten Ausführungsform wird das erfindungsgemäße Verfahren so durchgeführt, dass die Farbabweichungen zwischen den gedruckten Dekoren der Holzwerkstoffplatten der mindestens einen ersten Charge und jeder weiteren Charge bzw. der mindestens einen ersten Holzwerkstoffplatte und jeder weiteren Holzwerkstoffplatte ein und derselben Charge so gering sind, dass sie unter den oben genannten genormten Bedingungen von einem durchschnittlich trainierten Fachmann kaum wahrnehmbar sind. "Kaum wahrnehmbar" im Sinne der Erfindung bedeutet, dass ein durchschnittlich trainierter Fachmann keinen solchen Unterschied feststellt, der zu einer Reklamation führen würde.

In einer ganz besonders bevorzugten Ausführungsform wird das erfindungsgemäße Verfahren demnach so durchgeführt, dass keine Farbabweichungen zwischen den gedruckten Dekoren der Holzwerkstoffplatten der mindestens einen ersten Charge und jeder weiteren Charge bzw. der mindestens einen ersten Holzwerkstoffplatte und jeder weiteren Holzwerkstoffplatte ein und derselben Charge auftreten.

Nicht tolerierbar gemäß der Erfindung sind Farbabweichungen, die vom Menschen mindestens als deutlich oder stark wahrgenommen werden.

Dies gilt gleichermaßen für Farbabweichungen, die in verschiedenen Bereichen auf der Oberfläche einer großformatigen Holzwerkstoffplatte auftreten. Das Verfahren gemäß der vorliegenden Erfindung dient vorzugsweise dazu, Farbabweichungen, die nach dem Aufbringen eines Dekors in verschiedenen Bereichen auf der Oberfläche einer großformatigen Holzwerkstoffplatte auftreten können, zu verhindern bzw. zu minimieren.

Farbabweichungen können zum Beispiel mit dem Gleichheitsverfahren ermittelt werden. Bei diesem Verfahren wird durch ein technisches Gerät oder visuell mit dem Auge das Untersuchungsmuster mit einer Serie bekannter Standardmuster solange verglichen, bis die Gleichheit sicher festgestellt ist. Es können auch die gewählten Grundfarben anteilig angeboten werden. Technische Umsetzungen sind der Farbkreisel oder die maxwellsche Betrachtungsweise. Im ersten Falle wird durch einen schnellen Wechsel die zeitliche Auflösung des Messgerätes oder des Auges unterschritten, im zweiten Falle wird durch eine Unscharfstellung eine räumliche Verteilung der Grundfarben auf eine scheinbar gemeinsame Fläche gebracht und so vom Auge als einheitlicher Farbeindruck wahrgenommen. Üblicherweise nutzt diese Methode das Gleichheitsurteil des normalsichtigen Auges.

Eine Möglichkeit zur Beurteilung der Güte der Grundierung ist die Bestimmung des Weißgrades bzw. der Helligkeit L im L,a,b-Farbraum, oder beim Vergleichen der Helligkeit zwischen verschiedenen Bereichen einer Holzwerkstoffplatte oder zwischen verschiedenen Holzwerkstoffplatten die Bestimmung von Helligkeitsunterschieden (*ΔL*)*.* Gemäß der vorliegenden Erfindung ist der Helligkeitsunterschied *ΔL* < 1,0, vorzugsweise < 0,9; < 0,8; < 0,7 oder < 0,6, besonders bevorzugt < 0,5 zwischen verschiedenen Messpunkten auf der Oberfläche einer Holzwerkstoffplatte und/oder zwischen verschiedenen Messpunkten auf verschiedenen Holzwerkstoffplatten.

Das erfindungsgemäße Verfahren ist dazu geeignet, Farbabweichungen zwischen einzelnen Platten innerhalb einer Charge eines Trägermaterials, vorzugsweise von Holzwerkstoffplatten, zu minimieren. Erfindungsgemäß wird deshalb ein Verfahren zum Bedrucken von Holzwerkstoffplatten, insbesondere von Holzfaserwerkstoffplatten, mittels eines Digitaldruckverfahrens bereitgestellt,
umfassend die Schritte
a) Auftragen von mindestens einer Schicht einer ersten pigmentierten Grundierung auf die Holzwerkstoffplatten einer Charge des Trägermaterials,
b) Auftragen von mindestens einer Schicht einer zweiten pigmentierten Grundierung auf die Holzwerkstoffplatten,
c) Messen der Farbwerte der einzelnen Holzwerkstoffplatten und Weitergabe der Farbwerte an ein Computerprogramm;
d) Verarbeitung der Farbwerte der einzelnen Holzwerkstoffplatten in dem Computerprogramm und Anpassung der Farbwerte des Digitaldrucks für die einzelnen Holzwerkstoffplatten;
e) Bedrucken mindestens einer Seite der Holzwerkstoffplatten mittels Digitaldrucktechnik unter Ausbildung einer Dekorschicht derart, dass keine Farbabweichungen zwischen den gedruckten Dekoren der einzelnen Holzwerkstoffplatten einer Charge des Trägermaterials auftreten.

Die gleiche Vorgehensweise kann benutzt werden, wenn Farbabweichungen zwischen verschiedenen Chargen eines Trägermaterials, vorzugsweise von Holzwerkstoffplatten, auftreten.

Das erfindungsgemäße Verfahren umfasst dann die Schritte:
a) Auftragen von mindestens einer Schicht einer ersten pigmentierten Grundierung auf die Holzwerkstoffplatten der mindestens einen ersten Charge und der mindestens einen weiteren Charge,
b) Auftragen von mindestens einer Schicht einer zweiten pigmentierten Grundierung auf die Holzwerkstoffplatten der mindestens einen ersten Charge und der mindestens einen weiteren Charge,
c) Messen der Farbwerte der Holzwerkstoffplatten der mindestens einen ersten Charge und Weitergabe der Farbwerte an ein Computerprogramm;
d) Messen der Farbwerte der Holzwerkstoffplatten der mindestens einen weiteren Charge und Weitergabe der Farbwerte an das Computerprogramm;
e) Verarbeitung der Farbwerte der Holzwerkstoffplatten der mindestens einen ersten Charge und der mindestens einen weiteren Charge in dem Computerprogramm und Anpassung der Farbwerte des Digitaldrucks für die mindestens eine erste Charge und/oder mindestens eine weiteren Charge;
f) Bedrucken mindestens einer Seite der Holzwerkstoffplatten mittels Digitaldrucktechnik unter Ausbildung einer Dekorschicht derart, dass keine Farbabweichungen zwischen den gedruckten Dekoren der Holzwerkstoffplatten der mindestens einen ersten Charge und jeder weiteren Charge auftreten.

Die Farbe der ersten pigmentierten Grundierung und der zweiten pigmentierten Grundierung ist vorzugsweise ausgewählt aus weiß oder grau. Besonders bevorzugt ist es, wenn die erste pigmentierte Grundierung in der Farbe Grau ausgeführt wird und die zweite pigmentierte Grundierung die Farbe Weiß aufweist.

Die pigmentierte Grundierung in der Farbe Grau wird vorzugsweise in 1 bis 3 Schichten, besonders bevorzugt in zwei Schichten, am meisten bevorzugt in einer Schicht ausgeführt. Die pigmentierte Grundierung in der Farbe Weiß kann ebenfalls in mehr als einer Schicht aufgetragen werden (z.B. 2 bis 9 Schichten, vorzugsweise in 3 bis 7 Schichten, besonders bevorzugt in 5 oder 6 Schichten).

Mit dem Auftragen der pigmentierten Grundierungen in den Farben Weiß und Grau, wie oben beschrieben, ist ein technischer Effekt verbunden. Dadurch ist es möglich, Farbabweichungen zwischen den nachfolgend gedruckten Dekoren der Holzwerkstoffplatten zu minimieren.

Der Auftrag sowohl der grauen pigmentierten Grundierung als auch der weißen pigmentierten Grundierung erfolgt vorzugsweise auf wenigstens eine großflächige Seite der Holzwerkstoffplatten, insbesondere auf die Seite, auf die nachfolgend das Dekor aufgedruckt wird. In einer besonders bevorzugten Ausführungsform umfasst das erfindungsgemäße Verfahren das vollflächige Aufbringen sowohl der grauen pigmentierten Grundierung als auch der weißen pigmentierten Grundierung auf wenigstens eine großflächige Seite der Holzwerkstoffplatten, insbesondere auf die Seite, auf die nachfolgend das Dekor aufgedruckt wird.

Nach jedem Schichtauftrag wird die pigmentierte Grundierung z.B. in einem Konvektionstrockner oder einem Nahinfrarot-Trockner getrocknet.

Gemäß einer Ausführungsform kann das erfindungsgemäße Verfahren die kontinuierliche Messung der Helligkeit der mit der, vorzugsweise wasserbasierten, pigmentierten Grundierung beschichteten Trägerplatte umfassen.

In Abhängigkeit der ermittelten Helligkeit kann dann die Auftragsmenge der wasserbasierten pigmentierten Grundierung, die vorzugsweise Titandioxid als Weißpigment enthält, angepasst werden, um ein möglichst einheitliches Helligkeitsniveau des Trägermaterials zu halten. Die Anpassung der Auftragsmenge kann entweder automatisch durch eine Steuereinheit, wie beispielsweise einen Steuercomputer oder einen Prozessrechner, oder manuell erfolgen.

Die Farb- und Helligkeitsmessung kann mit herkömmlichen Farbmessgeräten durchgeführt werden. Vorzugsweise erfolgt die Farb- und Helligkeitsmessung mit einem Onlinefarbmessgerät.

Allerdings ändert sich zwischen den einzelnen Chargen der Trägermaterialien meist nicht nur die Helligkeit der Trägerplatten, sondern oft auch deren Farbe. Durch die nur relativ ungenau einstellbaren Walzen in den Auftragsaggregaten für die Grundierungen der Trägerplatten ist die Einstellung der genauen Auftragsmenge der wasserbasierten pigmentierten Druckfarbe nur eingeschränkt möglich und führt zu einem Pendeln um den gewünschten Helligkeitswert. Zudem ist die Beeinflussung der Farbe der Trägerplatten durch die die Weißpigmente enthaltende Grundierung nur sehr eingeschränkt möglich.

Gelöst wird dieses Problem durch eine kontinuierliche Farbmessung auf den vorgrundierten hellen, vorzugsweise weißen, Trägerplatten zur Ermittlung der Farbwerte und die anschließende Verarbeitung und Nutzung der gewonnenen Farbdaten zur Anpassung der Farbwerte des Dekordrucks. Vorzugsweise werden bei der Farbmessung die L*, a* und b*-Werte im sogenannten L*a*b*-Farbraum ermittelt.

Der L*a*b*-Farbraum ist ein Farbraum, der den Bereich der wahrnehmbaren Farben abdeckt. Der L*a*b*-Farbraum wird durch ein dreidimensionales Koordinatensystem beschrieben. Die L*-Achse beschreibt die Helligkeit (Luminanz) der Farbe mit Werten von 0 (Schwarz) bis 100 (Weiß). Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen. Die Skalen der a*-Achse und der b*-Achse umfassen einen Zahlenbereich von -150 bis +100 und -100 bis +150.

In dem erfindungsgemäßen Verfahren soll der Wert für die Helligkeit L* mindestens >50, >60 oder >70 sein. Vorzugsweise ist L*>80. In einer besonders bevorzugten Ausführungsform ist L*>85 oder >90.

In dem erfindungsgemäßen Verfahren liegen die Werte für a* und/oder b* in einem Bereich zwischen -100 und +100, -80 und +80, -60 und +60, -40 und +40 oder -20 und +20. Vorzugsweise liegen die Werte für a* und/oder b* in einem Bereich zwischen -10 und +10. In einer bevorzugten Ausführungsform liegen die Werte für a* und/oder b* in einem Bereich zwischen -5 und +5. In einer besonders bevorzugten Ausführungsform der Erfindung sind die Werte für a* und/oder b* nahe null.

Die Farbmessung erfolgt mittels eines herkömmlichen Farbmessgerätes, vorzugsweise mittels eines Onlinefarbmessgerätes. Anschließend erfolgt die Profilierung der Farbdaten der vorgrundierten Trägerplatte durch Verarbeitung der bei der kontinuierlichen Messung ermittelten L*, a* und b*-Werte mit einem Computerprogramm. Als Computerprogramm kommt vorzugsweise eine sogenannte RIP Software zum Einsatz.

RIP (raster imaging process) Software ist eine Software zur Berechnung von Farbwerten. In dem erfindungsgemäßen Verfahren wird bei der Anpassung der Farbdaten mittels der RIP Software unter Berücksichtigung der Helligkeit und/oder Farbe der Grundierung eine Umrechnung der gemessenen Farbwerte in das Standardfarbensystem CYMK für den Digitaldruck vorgenommen.

Anpassung der Farbwerte für den Digitaldruck bedeutet, dass die Anteile der einzelnen Bestandteile des CYMK-Standardfarbensystems verändert werden. Vorzugsweise werden die Anteile der einzelnen Bestandteile des CYMK-Standardfarbensystems so verändert, dass unter Berücksichtigung der ermittelten Helligkeit bzw. der ermittelten Farbwerte des Trägermaterials nach dem Dekordruck keine Farbabweichungen zwischen den gedruckten Dekoren der Trägerplatten der mindestens einen ersten Charge und jeder weiteren Charge auftreten.

In einer weiteren Ausführungsform umfasst das erfindungsgemäße Verfahren optional die Qualitätskontrolle der Farben der Dekore nach dem Digitaldruck. Bei dieser Qualitätskontrolle wird geprüft, ob zwischen den mit gedruckten Dekoren versehenen Trägerplatten eines Trägermaterials oder zwischen verschiedenen Bereichen auf der Oberfläche einer Trägerplatte Farbabweichungen im Dekor auftreten. Dies kann beispielsweise durch visuelle Kontrolle oder mittels Farbmessung erfolgen.

Als Druckmotive für den Digitaldruck können typischerweise verschiedene Dekore wie z.B. Holz-, Fliesen-, Fantasiedekore oder Parkettimitate eingesetzt werden.

Im Digitaldruck wird zum Bedrucken der mindestens einen Seite der Holzwerkstoffplatte bevorzugt eine wasserbasierte Digitaldrucktinte verwendet. Der Digitaldruck kann unter Verwendung eines Digitaldruckers mit einer wasserbasierten Digitaldrucktinte, einer UV- oder lösungsmittelbasierten Tinte ausgeführt werden. Bevorzugt ist die Verwendung einer wasserbasierten Digitaldrucktinte. Die Menge an verwendeter Digitaldrucktinte kann zwischen 5 und 15 g/m², bevorzugt 6 und 8 g/m² betragen.

Entsprechend einer weiteren Ausführungsform wird durch das vorliegende Verfahren eine Schutzschicht auf einer digital bedruckten Holzwerkstoffplatte bereitgestellt, die gleichzeitig als Vermittler, so genannter Primer, zwischen an sich nicht verträglichen Schichten, wie dem Dekordruck bzw. der Dekorschicht einerseits und einem nachfolgenden Verschleißschutz oder anderen Veredlungsschichten andererseits angeordnet ist.

Auf den Digitaldruck kann vorliegend entweder ein Harz, bevorzugt ein wasserverträgliches Harz, ein strahlenhärtbarer, typischerweise nicht wasserverträglicher Lack, z.B. ausgewählt aus der Gruppe der Acrylate, modifizierte Acrylate und/oder Epoxide; oder auch Polyurethane, die über gute Haftungseigenschaften verfügen, unmittelbar aufgetragen werden. Nach Anhärten oder Angelieren der Schutzschicht ist eine Zwischenlagerung der beduckten Platten ohne Gefahr einer Oberflächenverletzung oder Verschmutzung der Dekorschicht möglich. Somit sind selbst bei undefinierten Zeitabständen zwischen einem Bearbeitungsschritt Digitaldekordruck und einem weiter bearbeitenden Schritt keine Probleme, wie Verschmutzungen von Platten oder Abrieb und/oder Ablösung des Dekors zu erwarten. Damit ist auch sichergestellt, dass bei einer Betriebsunterbrechung in der Weiterverarbeitung der Digitaldrucker seine Arbeit nicht einstellen muss.

In einer Ausführungsform umfasst die auf die Dekorschicht der Holzwerkstoffplatte aufzutragende Schutzschicht mindestens ein wasserverträgliches Harz, bevorzugt ein Formaldehyd-haltiges Harz, insbesondere bevorzugt Melamin-Formaldehyd-Harz, Harnstoff-Formaldehyd-Harz und/oder Melamin-Harnstoff-Formaldehyd-Harz. Das Harz kann demnach in flüssiger Form oder aber auch in fester Form aufgetragen werden, wobei die Verwendung eines flüssigen Harzes bevorzugt ist.

Im Anschluss wird die das mindestens eine wasserverträgliche Harz umfassende Schutzschicht soweit vorgetrocknet bis das Harz noch fließfähig und vernetzbar ist. Das Antrocknen der ein wasserverträgliches Harz enthaltenden Schutzschicht erfolgt typischerweise in einem kontinuierlichen Trockenofen, wie diese aus der Holzwerkstoffplatten-Herstellung bekannt sind. In Abhängigkeit von der Auftragsmenge kann der Prozess der Vortrocknung 5 bis 15 Sekunden, bevorzugt 5 bis 10 Sekunden dauern.

Wird ein strahlenhärtbarer Lack als Schutzschicht verwendet, kann das sich dem Auftrag der Schutzschicht anschließende Angelieren der Schutzschicht unter Verwendung von UV-Strahlung (z.B. bei 320-400 nm), ESH-Strahlung und/oder NIR-Strahlung erfolgen. Nach dem Angelieren weist der Lack bevorzugt einen Polymerisationsgrad zwischen 20 - 60%, bevorzugt 30-50% auf.

In einer weitergehenden Variante des vorliegenden Verfahrens wird die auf die bedruckte Seite der Holzwerkstoffplatte aufzutragende Schutzschicht in einer Menge zwischen 5 und 50 g/m², bevorzugt 8 und 30 g/m², insbesondere bevorzugt 10 und 20 g/m² aufgetragen.

Es ist ebenfalls möglich, auf das Dekor bzw. die Dekore mindestens eine Schutzschicht, insbesondere eine Schicht umfassend abriebfeste Partikel, natürliche Fasern, synthetische Fasern und/oder weitere Additive aufzutragen, wobei Harze wie Melamin-Formaldehyd-Harz, oder Harnstoff-Formaldehyd-Harz, Acrylatharze und Polyurethanharze als geeignete Bindemittel zum Einsatz kommen können.

In einer weiteren Ausführungsform des erfindungsgemäßen Verfahrens werden auf das Dekor bzw. die Dekore mehrere Schutzschichten aufgetragen, die unterschiedliche Zusätze umfassen können.

In einer bevorzugten Ausführungsform umfasst das erfindungsgemäße Verfahren deshalb die weiteren Schritte:
- Aufbringen einer ersten Harzschicht, die abriebfeste Partikel enthält, auf die mit dem Dekor versehene Seite der Holzwerkstoffplatte,
- Trocknen der ersten Harzschicht auf eine Restfeuchte von 3 % bis 6 %; und/oder
- Aufbringen einer zweiten Harzschicht auf die mit dem Dekor versehene Seite der Holzwerkstoffplatte, die Fasern enthält,
- Trocknen der zweiten Harzschicht auf eine Restfeuchte von 3 % bis 6 %; und/oder
- Aufbringen einer mindestens dritten Harzschicht, die Glaspartikel enthält, auf die mit dem Dekor versehene Seite der Holzwerkstoffplatte,
- Trocknen der dritten Harzschicht auf eine Restfeuchte von 3% bis 6%; und
- Verpressen des Schichtaufbaus unter Druck- und Temperatureinfluss zur Ausbildung eines Laminats.

Die abriebfesten Partikel sind bevorzugt ausgewählt aus der Gruppe enthaltend Aluminiumoxide, Korund, Borcarbide, Siliziumdioxide, Siliziumcarbide und Glaspartikel. Als natürliche und/oder synthetische Fasern kommen insbesondere Fasern ausgewählt sind aus der Gruppe enthaltend Holzfasern, Zellulosefasern, Wollfasern, Hanffasern und organische oder anorganische Polymerfasern zum Einsatz.

Als Additive können leitfähige Substanzen, Flammschutzmittel, luminiszierende Stoffe und Metalle zugegeben werden. Dabei können die leitfähigen Substanzen ausgewählt sein aus der Gruppe enthaltend Ruß, Kohlefasern, Metallpulver und Nanopartikel, insbesondere Kohlenstoffnanoröhren. Es können auch Kombinationen dieser Substanzen zum Einsatz kommen. Als Flammschutzmittel werden bevorzugt Phosphate, Borate, insbesondere Ammoniumpolyphosphat, Tris(tri-bromneopentyl)phosphat, Zinkborat oder Borsäurekomplexe von mehrwertigen Alkoholen verwendet. Als luminiszierende Stoffe werden bevorzugt fluoreszierende und/oder phosphoreszierende Stoffe auf anorganischer oder organischer Basis, insbesondere Zinksulfid und Erdalkalialuminate.

Vorzugsweise sind zur Erhöhung der Abriebfestigkeit Korundpartikel in der ersten Harzschicht enthalten. Dies ist insbesondere bei der Verwendung als Fußbodenpaneel wichtig, um den hohen Belastungen, denen ein Fußbodenpaneel ausgesetzt ist, standhalten zu können. Als Korund kommt beispielsweise eine Mischung aus üblichen silanisierten Korunden unterschiedlicher Körnung zum Einsatz. Das Korund kann dem Harz vor dem Auftragen einfach beigegeben werden.

Als Fasern in der zweiten Harzschicht werden vorzugsweise Zellulosefasern verwendet. Dazu können handelsüblichen Fasern verwendet werden, die ebenfalls den aufzubringenden Harzschichten beigegeben werden können.

Bei den in der dritten Harzschicht enthaltenen Glaspartikeln handelt es sich beispielsweise um handelsübliche Mikroglaskugeln. Auch diese können einfach in die aufzubringende Harzschicht eingebracht werden.

Die dritte Harzschicht enthält vorzugsweise einen Anteil von 20 % Glaspartikel. Für die zweite Harzschicht haben sich etwa 5 % Zellulose als vorteilhaft erwiesen. Die erste Harzschicht enthält insbesondere 20 % Korundpartikel.

In einer weiteren Ausführungsform des erfindungsgemäßen Verfahrens können auch auf die Unterseite der Holzwerkstoffplatte eine oder mehrere Harzschichten aufgebracht werden. Dadurch werden insbesondere die durch die auf der Oberseite der Holzwerkstoffplatte aufgebrachten Harzschichten wirkenden Zugkräfte ausgeglichen. In einer besonders bevorzugten Ausführungsform werden die jeweils an der Ober- und Unterseite aufgebrachten Harzschichten in gleicher Menge aufgetragen bzw. der auf die Unterseite der Holzwerkstoffplatte aufgebrachte Gegenzug entspricht im Schichtaufbau und der jeweiligen Schichtdicke genau der an der Oberseite aufgebrachten Schichtfolge.

Die auf die Unterseite der Holzwerkstoffplatte aufgebrachten Harzschichten können eingefärbt sein.

Allen Harzschichten können Additive wie Härter, Netz- und Trennmittel beigegeben werden.

Die Harzschichten auf der Ober- und der Unterseite der Holzwerkstoffplatte können eine 60%ige Kunstharzlösung enthalten.

Das Trocknen auf eine Restfeuchte von 3 % bis 6 % dient dazu, den Vernetzungsprozess der aufgebrachten Harzschichten zu unterbinden.

In einer weiteren Ausführungsform des vorliegenden Verfahrens wird das bedruckte und ggf. mit einer oder mehreren Schutzschicht(en) versehene Trägermaterial in einer Kurztakt-Presse weiterbearbeitet bzw. veredelt. Unter Druck- und Temperatureinfluss in einer Kurztakt-Presse schmelzen die Harzschichten wieder auf. Der Vernetzungsprozess setzt sich dadurch fort. Die einzelnen Harzschichten werden somit nicht nur in sich sondern auch untereinander vernetzt. Im Ergebnis können die aufgebrachten Melaminharzschichten unter Einschluss des Dekors vernetzt und zu einem Laminat ausgehärtet werden. Übliche Kurztakt-Pressen arbeiten beispielsweise bei einem Druck von 30 bis 60 kg/cm², einer Temperatur an der Holzwerkstoffoberfläche von etwa 165°C und einer Presszeit von 6 bis 12 Sekunden. Während der Weiterverarbeitung in der Kurztakt-Presse können unter Verwendung eines strukturierten Pressblechs auch Oberflächenstrukturen in mindestens einer Oberfläche, vorzugsweise mindestens der Oberseite des Trägermaterials wie einer Holzwerkstoffplatte erzeugt werden, die optional auf das Dekor abgestimmt ausgeführt sein können (so genannte dekorsynchrone Struktur). Vorzugsweise sind die Oberflächenstrukturen weitgehend deckungsgleich zum Dekor ausgebildet. In diesem Fall spricht man von Embossed-In-Register Strukturen Bei Holzdekoren können die Strukturen in Form von Porenstrukturen vorliegen, die der Maserung folgen. Bei Fliesendekoren können die Strukturen Vertiefungen im Bereich von dem Dekor umfasster Fugenfüllungslinien sein.

In einer besonders bevorzugten Ausführungsform umfasst das erfindungsgemäße Verfahren die Schritte:
a) Anschleifen der Holzwerkstoffplatten von mindestens einer ersten Charge,
b) Auftragen einer Grundierung auf Holzwerkstoffplatten von mindestens einer ersten Charge,
c) Auftragen von mindestens einer Schicht einer ersten pigmentierten Grundierung auf die Holzwerkstoffplatten der mindestens einen ersten Charge,
d) Auftragen von mindestens einer Schicht einer zweiten pigmentierten Grundierung auf die Holzwerkstoffplatten der mindestens einen ersten Charge,
e) Messen der Farbwerte der Holzwerkstoffplatten mindestens einer ersten Charge und Weitergabe der Farbwerte an ein Computerprogramm;
f) Verarbeitung der Farbwerte der Holzwerkstoffplatten der mindestens einen ersten Charge in dem Computerprogramm und Anpassung der Farbwerte des Digitaldrucks;
g) Bedrucken mindestens einer Seite der Holzwerkstoffplatten mittels Digitaldrucktechnik unter Ausbildung einer Dekorschicht derart, dass keine Farbabweichungen zwischen den gedruckten Dekoren der Holzwerkstoffplatten der mindestens einen ersten Charge auftreten;
h) Auftragen mindestens einer Schutzschicht enthaltend mindestens ein Harz, mindestens einen strahlenhärtbaren Lack und/oder mindestens ein Polyurethan auf die Dekorschicht; und
i) Antrocknen und/oder Angelieren der auf der Dekorschicht aufgetragenen Schutzschicht;
und optional
j) Qualitätskontrolle der Farben der Dekore nach dem Digitaldruck.

Wenn Farbabweichungen zwischen den Holzwerkstoffplatten verschiedener Chargen minimiert werden sollen, umfasst das erfindungsgemäße Verfahren in einer besonders bevorzugten Ausführungsform die Schritte:
a) Anschleifen der Holzwerkstoffplatten von mindestens einer ersten Charge und mindestens einer weiteren Charge,
b) Auftragen einer Grundierung auf Holzwerkstoffplatten von mindestens einer ersten Charge und mindestens einer weiteren Charge,
c) Auftragen von mindestens einer Schicht einer ersten pigmentierten Grundierung auf die Holzwerkstoffplatten der mindestens einen ersten Charge und der mindestens einen weiteren Charge,
d) Auftragen von mindestens einer Schicht einer zweiten pigmentierten Grundierung auf die Holzwerkstoffplatten der mindestens einen ersten Charge und der mindestens einen weiteren Charge,
e) Messen der Farbwerte der Holzwerkstoffplatten mindestens einer ersten Charge und Weitergabe der Farbwerte an ein Computerprogramm;
f) Messen der Farbwerte der Holzwerkstoffplatten mindestens einer weiteren Charge und Weitergabe der Farbwerte an das Computerprogramm;
g) Verarbeitung der Farbwerte der Holzwerkstoffplatten der mindestens einen ersten Charge und/oder der mindestens einen weiteren Charge in dem Computerprogramm und Anpassung der Farbwerte des Digitaldrucks;
h) Bedrucken mindestens einer Seite der Holzwerkstoffplatten mittels Digitaldrucktechnik unter Ausbildung einer Dekorschicht derart, dass keine Farbabweichungen zwischen den gedruckten Dekoren der Holzwerkstoffplatten der mindestens einen ersten Charge und jeder weiteren Charge auftreten;
i) Auftragen mindestens einer Schutzschicht enthaltend mindestens ein Harz, mindestens einen strahlenhärtbaren Lack und/oder mindestens ein Polyurethan auf die Dekorschicht; und
j) Antrocknen und/oder Angelieren der auf der Dekorschicht aufgetragenen Schutzschicht;
und optional
k) Qualitätskontrolle der Farben der Dekore nach dem Digitaldruck.

Das vorliegende Verfahren wird in einer Vorrichtung zur Anpassung von Dekordrucken auf Trägermaterialien durchgeführt, wobei die Vorrichtung folgende Elemente umfasst:
- Mindestens ein Mittel zum Messen der Farbwerte des Trägermaterials,
- mindestens ein Mittel zum Anpassen der Farbdaten,
- mindestens eine Druckstraße mit mindestens einem Digitaldrucker zum Bedrucken mindestens einer Seite des Trägermaterials mittels Digitaldrucktechnik unter Ausbildung einer Dekorschicht derart, dass keine Farbabweichungen zwischen den gedruckten Dekoren des Trägermaterials der mindestens einen ersten Charge bzw. zwischen den gedruckten Dekoren des Trägermaterials der mindestens einen ersten Charge und jeder weiteren Charge auftreten.

In einer weiteren Variante umfasst die vorliegende Vorrichtung mindestens ein Mittel oder eine Vorrichtung zum Aufbringen einer Grundierung auf das Trägermaterial.

In einer bevorzugten Variante umfasst die erfindungsgemäße Vorrichtung mindestens ein Mittel oder eine Vorrichtung zum Auftragen einer pigmentierten weißen Grundierung, die vorzugsweise wasserbasiert ist, auf das Trägermaterial.

In einer besonders bevorzugten Variante umfasst die erfindungsgemäße Vorrichtung mindestens ein Mittel oder eine Vorrichtung zum Auftragen einer pigmentierten grauen Grundierung, die vorzugsweise wasserbasiert ist, auf das Trägermaterial.

Sowohl die graue als auch die weißen Grundierungen können analog, beispielsweise mittels eines Walzenauftragwerkes oder digital, beispielsweise mittels eines Inkjet Druckers erfolgen.

In einer weiterhin bevorzugten Ausführungsform umfasst die Vorrichtung mindestens ein Mittel zum Messen der Helligkeit des mit der pigmentierten Grundierung, die vorzugsweise wasserbasiert ist, beschichteten Trägermaterials.

Die Mittel bzw. Vorrichtungen zum Aufbringen der Grundierung und/oder der pigmentierten Grundierung und der Messung der Helligkeit des Trägermaterials sind vorzugsweise vor dem mindestens einen Mittel zum Messen der Farbwerte des Trägermaterials, d.h. der L*a*b*-Farbwerte, angeordnet.

In einer weitergehenden Variante umfasst die vorliegende Vorrichtung mindestens ein Mittel zum Aufbringen mindestens einer Schutzschicht auf das mit dem jeweiligen Druckdekor versehene Trägermaterial. Dieses Mittel bzw. Vorrichtung zum Aufbringen einer Schutzschicht ist vorzugsweise im Anschluss an die mindestens eine Druckstraße angeordnet.

Vorzugsweise enthält die Vorrichtung mehrere Mittel zum Aufbringen mehrerer Schutzschichten auf das mit dem jeweiligen Druckdekor versehene Trägermaterial. In einer besonders bevorzugten Ausführungsform enthält die Vorrichtung zwei, drei oder vier Mittel zum Aufbringen von zwei, drei bzw. vier Schutzschichten auf das mit dem jeweiligen Druckdekor versehene Trägermaterial.

Die erfindungsgemäße Vorrichtung kann auch zusätzlich ein oder mehrere Mittel zum Auftragen von einer oder mehreren Harzschichten an der Unterseite des Trägermaterials umfassen. Wenn die Ober- und die Unterseite des Trägermaterials mit Schutzschichten versehen werden sollen, können die Mittel zum Auftragen der Schutzschichten beispielsweise als Doppelauftragsvorrichtungen ausgeführt sein.

In einer weiteren Ausführungsform umfasst die vorliegende Vorrichtung mindestens ein Mittel zur Messung der Farbwerte des mit dem Druckdekor versehenen Trägermaterials zur Qualitätskontrolle.

In einer bevorzugten Ausführungsform weist die vorliegende Vorrichtung mindestens eine Kurztaktpresse zum Verpressen des mit dem Druckdekor versehenen Trägermaterials und der darauf angeordneten Schutzschicht auf.

Das vorliegend beschriebene Verfahren hat den Vorteil, dass eine schnelle Bereitstellung von farblich angepassten Produkten möglich ist, die trotz Farbschwankungen des Trägermaterials oder in der Grundierung des Trägermaterials keine signifikanten Farbabweichungen aufweisen. Selbst geringste Farbschwankungen des Trägermaterials oder in der Grundierung des Trägermaterials können direkt im Prozess ermittelt und korrigiert werden. Das vorliegend beschriebene Verfahren stellt insofern ein sich selbst regelndes System dar. Das Verfahren führt außerdem zu einer Kostensenkung im Herstellungsprozess durch Minimierung der Herstellung fehlerhafter Produkte bzw. von Produkten mit unerwünschten Farbabweichungen im mittels Digitaldruck erzeugten Dekor, da den Farbschwankungen des Trägermaterials oder in der Grundierung des Trägermaterials bereits im Vorfeld vor dem Bedrucken Rechnung getragen wird und der Digitaldruck dadurch bereits mit angepassten und optimierten Farbwerten durchgeführt wird.

Die vorliegende Erfindung stellt weiterhin eine Holzwerkstoffplatte, vorzugsweise eine Holzfaserwerkstoffplatte bereit, die nach dem erfindungsgemäßen Verfahren hergestellt wurde. In einer besonders bevorzugten Ausführungsform stellt die Erfindung eine Holzwerkstoffplatte bereit, die einer erste pigmentierte Grundierung und eine zweite pigmentierte Grundierung umfasst, wobei die erste pigmentierte Grundierung vorzugsweise die Farbe Grau aufweist und die zweite pigmentierte Grundierung vorzugsweise die Farbe Weiß aufweist. Es ist bevorzugt, wenn die pigmentierte graue Grundierung in 1 bis 3 Schichten, besonders bevorzugt in zwei Schichten, am meisten bevorzugt in einer Schicht auf die Holzwerkstoffplatte aufgetragen worden ist. Weiterhin bevorzugt ist es, wenn die pigmentierte weiße Grundierung in 2 bis 9 Schichten, bevorzugt 3 bis 7 Schichten, besonders bevorzugt 5 oder 6 Schichten auf die Holzwerkstoffplatte aufgetragen worden ist.

Das erfindungsgemäße Verfahren weist mehrere Vorteile auf. Die mit dem erfindungsgemäßen Verfahren hergestellten Holzwerkstoffplatten weisen eine höhere Opazität und Homogenität auf der mit der pigmentierten grauen Grundierung und der pigmentierten weißen Grundierung beschichteten Oberfläche auf gegenüber herkömmlich grundierten Holzwerkstoffplatten. Dies wirkt sich vorteilhaft für den nachfolgenden Auftrag eines Dekors, vorzugsweise mittels Digitaldruck, aus. Das nachfolgend aufgetragene Dekor ist durch die farbliche Übereinstimmung über den gesamten Plattenbereich charakterisiert.

Die Erfindung wird nachfolgend anhand von drei Ausführungsbeispielen näher erläutert.

### Ausführungsbeispiele

### Beispiel 1: Herstellung von Holzwerkstoffplatten mit weißer Grundierung

Eine geschliffene HDF-Platte (7 mm, 2800 x 2070 mm) wurde in Walzenauftragsmaschinen zunächst mit einer farblosen Grundierung (20 g Grundierung/m² (65% Feststoff), dann mit einer weißen Grundierung versehen und getrocknet. Der Auftrag der weißen Grundierung lag bei 30 µm. Anschließend wurde diese HDF-Platte mit zwei weiteren Farbaufträgen von jeweils 8 bis 9 g/m² weiß in zwei weiteren Walzenauftragsmaschinen versehen und in allen drei Zwischenschritten mehrfach farblich vermessen, wobei die Messpunkte regelmäßig über die Platte verteilt waren.

Folgende Werte wurden mit einer Weißgrundierung ermittelt:

**Tabelle 1: Platte 1 mit erstem Auftrag Weiß, Auftragsdicke 30 µm (entspricht ca. 45 g Grundierung pro m²)**

| | L | a | b |
|---|---|---|---|
| Messwert 1 | 96,08 | -0,56 | 1,66 |
| Messwert 2 | 96,64 | -0,48 | 1,98 |
| Messwert 3 | 96,48 | -0,49 | 1,84 |
| Messwert 4 | 96,05 | -0,54 | 1,66 |
| Messwert 5 | 95,21 | -0,64 | 1,17 |
| Messwert 6 | 96,64 | -0,48 | 1,98 |
| | | | |
| **maximale Abweichung:** | **1,43** | **0,15** | **0,81** |

**Tabelle 2: Platte 1 mit erstem Weißauftrag und zweitem Weißauftrag mit ca. 8 bis 9 g Grundierung pro m²**

| | L | a | b |
|---|---|---|---|
| Messwert 1 | 96,59 | -0,45 | 1,53 |
| Messwert 2 | 96,68 | -0,37 | 1,96 |
| Messwert 3 | 95,83 | -0,56 | 1,14 |
| Messwert 4 | 96,33 | -0,43 | 1,67 |
| Messwert 5 | 96,67 | -0,43 | 1,73 |
| Messwert 6 | 96,57 | -0,48 | 1,55 |
| | | | |
| **maximale Abweichung:** | **0,85** | **0,19** | **0,82** |

**Tabelle 3: Platte 1 mit erstem Weißauftrag und zweitem Weißauftrag mit ca. 8 bis 9 g Grundierung pro m², sowie drittem Weißauftrag mit ca. 8 bis 9 g Grundierung pro m2**

| | **L** | **a** | **b** |
|---|---|---|---|
| Messwert 1 | 97,13 | -0,34 | 1,6 |
| Messwert 2 | 96,89 | -0,49 | 1,28 |
| Messwert 3 | 97,16 | -0,38 | 1,43 |
| Messwert 4 | 96,15 | -0,42 | 1,14 |
| Messwert 5 | | | |
| Messwert 6 | | | |
| | | | |
| **maximale Abweichung:** | **1,01** | **0,15** | **0,46** |

### Ergebnisbeurteilung

Bei einem Farbauftrag mit pigmentierter weißer Grundierung in der angegebenen Schichtdicke von 30 µm wurde eine Differenz der Helligkeitswerte von 1,43 ΔL festgestellt. Dies deutet auf eine unzureichende Deckung der weißen Farbe auf dem Untergrund hin und führt zu Problemen beim Bedrucken der Platte im Digitaldruckverfahren, insbesondere zu Farbabweichungen. Eine Toleranzgrenze im Bereich von 0,5 ΔL sollte nicht überschritten werden. Allerdings lag die Differenz des L-Wertes selbst nach zwei weiteren Weißaufträgen von jeweils 8 bis 9 g Grundierung pro m² ist immer noch bei >1 ΔL.

| *Messmethode* | |
|---|---|
| Spektraltechnologie | |
| Spektralanalyse: | DRS-Technologie |
| Spektralbereich: | 400-700 nm im 10 mm Intervall |
| | |

| *Optik* | |
|---|---|
| Messgeometrie: | 45°/0°, Ringbeleuchtungsoptik, ISO 5-4:2009(E) |
| Lichtquelle: | gasgefüllte Wolfram-Glühlampe (Lichtart A) und UV LED |
| Messbedingungen: | gemäß ISO 13655:2009 (D50) |
| Hersteller: | X-Rite |
| Modell: | Exact |

Die Weissgradmessung gemäß ISO 13655:2009 wurde mit dem oben dargestellten Messgerät an verschiedenen Messpunkten innerhalb der Testplatte durchgeführt.

### Beispiel 2: Herstellung von Holzwerkstoffplatten mit grauer Grundierung

Eine geschliffene HDF-Platte (7 mm, 2800 x 2070 mm) wurde in Walzenauftragsmaschinen zunächst mit einer farblosen Grundierung (20 g Grundierung/m², Feststoff: 65%), dann mit einer grauen Grundierung (Mischungsverhältnis 100g weiße Grundierung mit einem Zusatz von 3g schwarzer Druckfarbe auf Wasserbasis) versehen und getrocknet. Der Auftrag der grauen Grundierung lag bei 30 µm. Anschließend wurde diese HDF-Platte mit zwei weiteren weißen Farbaufträgen von jeweils 8 bis 9 g Grundierung pro m² in zwei weiteren Walzenauftragsmaschinen versehen und nach allen drei Zwischenschritten mehrfach farblich vermessen, wobei die Messpunkte regelmäßig über die Platte verteilt waren.

Folgende Werte wurden mit einer Graugrundierung ermittelt:

**Tabelle 4: Platte 2 mit erstem Auftrag grau, Auftragsdicke 30 µm (entspricht ca. 45 g Grundierung pro m²)**

| | **L** | **a** | **b** |
|---|---|---|---|
| Messwert 1 | 80,34 | -0,66 | -0,31 |
| Messwert 2 | 80,47 | -0,68 | -0,19 |
| Messwert 3 | 80,41 | -0,67 | -0,17 |
| Messwert 4 | 80,54 | -0,68 | -0,22 |
| Messwert 5 | 80,44 | -0,69 | -0,19 |
| Messwert 6 | 80,43 | -0,69 | -0,15 |
| | | | |
| **maximale Abweichung:** | **0,2** | **0,03** | **0,16** |

**Tabelle 5: Platte 2 mit erstem Auftrag (grau) und zweitem Auftrag (weiß) mit ca. 8 bis 9 g Grundierung pro m²**

| | **L** | **a** | **b** |
|---|---|---|---|
| Messwert 1 | 89,16 | -1,14 | -1,59 |
| Messwert 2 | 89,36 | -1,14 | -1,56 |
| Messwert 3 | 89,19 | -1,12 | -1,46 |
| Messwert 4 | 89,36 | -1,13 | -1,52 |
| Messwert 5 | 89,2 | -1,13 | -1,46 |
| Messwert 6 | 89,62 | -1,13 | -1,58 |
| | | | |
| **maximale Abweichung:** | **0,46** | **0,03** | **0,13** |

**Tabelle 6: Platte 2 mit erstem Auftrag (grau) und zweitem Auftrag (weiß) mit ca. 8 bis 9 g Grundierung pro m², sowie drittem Auftrag von ca. 8 bis 9 g Grundierung pro m² (weiß)**

| | **L** | **a** | **b** |
|---|---|---|---|
| Messwert 1 | 92,46 | -1,05 | -1,18 |
| Messwert 2 | 92,56 | -1,05 | -1,06 |
| Messwert 3 | 92,66 | -1,03 | -1,04 |
| Messwert 4 | 92,27 | -1,04 | -1,05 |
| Messwert 5 | | | |
| Messwert 6 | | | |
| | | | |
| **maximale Abweichung:** | **0,39** | **0,03** | **0,14** |

### Ergebnisbeurteitung

Bei einem Farbauftrag mit grau pigmentierter Grundierung in der angegebenen Schichtdicke von 30 µm wurde eine Differenz der Helligkeitswerte von 0,2 ΔL festgestellt. Das Ergebnis zeigt eine höhere Homogenität und Opazität des Untergrundes. Allerdings ist bei diesem Auftrag der Helligkeitswert niedriger als bei einem Weißauftrag. Nach dem Auftrag von zwei weiteren Weißaufträgen von jeweils 8 bis 9 g Grundierung pro m² bleibt diese Stabilität erhalten und der Helligkeitswert des Untergrundes steigt deutlich an (ca. L = +12). Im Vergleich zu der weißen Grundierung werden bei der "grauen" Grundierung die Schwankungen der L-, a-, b-Werte deutlich reduziert. Auch der Absolutwert liegt beim b-Wert näher an der Neutralgrauachse.

| *Messmethode* | |
|---|---|
| Spektraltechnologie | |
| Spektralanalyse: | DRS-Technologie |
| Spektralbereich: | 400-700 nm im 10 mm Intervall |
| | |

| *Optik* | |
|---|---|
| Messgeometrie: | 45°/0°, Ringbeleuchtungsoptik, ISO 5-4:2009(E) |
| Lichtquelle: | gasgefüllte Wolfram-Glühlampe (Lichtart A) und UV LED |
| Messbedingungen: | gemäß ISO 13655:2009 (D50) |
| Hersteller: | X-Rite |
| Modell: | Exact |

Die Weissgradmessung gemäß ISO 13655:2009 wurde mit dem oben dargestellten Messgerät an verschiedenen Messpunkten innerhalb der Testplatte durchgeführt.

Sowohl die graue als auch die weißen Grundierungen können analog, beispielsweise mittels eines Walzenauftragwerkes oder digital, beispielsweise mittels eines Inkjet-Druckers erfolgen.

Das anschließende Bedrucken der beiden vorgrundierten Platten, insbesondere mittels eines Digitaldruckers, erzeugte bei der "grauen" Grundierung im Gegensatz zu der Platte mit der weißen Grundierung keine sichtbaren Abweichungen im Druckbild. Mit Hilfe der RIP-Software (Raster imaging process) des Digitaldruckers ist somit die Anpassung an eine Grundierung, die insgesamt eine etwas niedrigere Helligkeit besitzt, aber homogener ist, besser möglich als eine in sich inhomogenere Grundierung.

### Beispiel 3: Weiterverarbeitung der HDF-Platten

Die Platten 1 und 2 wurden anschließend auf der bedruckten Seite mit einer ersten Schicht aus Melaminharz, die 20 % Korundpartikel enthielt, beschichtet und anschließend in einem Trockenofen auf eine Restfeuchte von 4 % getrocknet.

Danach wurden alle Platten auf der bedruckten Seite mit einer zweiten Schicht aus Melaminharz, die 5 % Zellulosefasern enthielt, beschichtet und anschließend in einem Trockenofen auf eine Restfeuchte von 4 % getrocknet.

Danach wurden alle Platten auf der bedruckten Seite mit einer dritten Melaminharzschicht, die 20 % Mikroglaskugeln enthielt, beschichtet und in einem Trockenofen ebenfalls auf eine Restfeuchte von 4 % getrocknet.

Abschließend erfolgte die Aushärtung der drei Melaminharzschichten zu einem Laminat in einer Kurztakt-Pressen bei einem Druck von 50 kg/cm², einer Temperatur an der Holzwerkstoffoberfläche von etwa 165°C und einer Presszeit von 10 Sekunden.

Die Dekore der Platten der Charge I und der Charge II wurden nach jedem Beschichtungsschritt und nach dem Verpressen in der Kurztakt-Presse miteinander verglichen. Dabei ließen sich nach dem Auftragen der einzelnen Melaminharzschichten und auch nach dem Durchlaufen der Kurztakt-Presse keine signifikanten Farbabweichungen feststellen.

## Patentansprüche

1. Verfahren zum Bedrucken von Holzwerkstoffplatten, insbesondere von Holzfaserwerkstoffplatten, mittels eines Digitaldruckverfahrens,
umfassend die Schritte
a) Auftragen von mindestens einer Schicht einer ersten pigmentierten Grundierung auf die Holzwerkstoffplatten einer Charge des Trägermaterials,
b) Auftragen von mindestens einer Schicht einer zweiten pigmentierten Grundierung auf die Holzwerkstoffplatten,
c) Messen der Farbwerte der einzelnen Holzwerkstoffplatten und Weitergabe der Farbwerte an ein Computerprogramm;
d) Verarbeitung der Farbwerte der einzelnen Holzwerkstoffplatten in dem Computerprogramm und Anpassung der Farbwerte des Digitaldrucks für die einzelnen Holzwerkstoffplatten;
e) Bedrucken mindestens einer Seite der Holzwerkstoffplatten mittels Digitaldrucktechnik unter Ausbildung einer Dekorschicht derart, dass keine Farbabweichungen zwischen den gedruckten Dekoren der einzelnen Holzwerkstoffplatten einer Charge des Trägermaterials auftreten.

2. Verfahren zum Bedrucken von Holzwerkstoffplatten, insbesondere von Holzfaserwerkstoffplatten, mittels eines Digitaldruckverfahrens,
umfassend die Schritte
a) Auftragen mindesten einer Schicht einer ersten pigmentierten Grundierung auf die Holzwerkstoffplatten der mindestens einen ersten Charge und der mindestens einen weiteren Charge,
b) Auftragen mindesten einer Schicht einer zweiten pigmentierten Grundierung auf die Holzwerkstoffplatten der mindestens einen ersten Charge und der mindestens einen weiteren Charge,
c) Messen der Farbwerte der Holzwerkstoffplatten der mindestens einen ersten Charge und Weitergabe der Farbwerte an ein Computerprogramm;
d) Messen der Farbwerte der Holzwerkstoffplatten der mindestens einen weiteren Charge und Weitergabe der Farbwerte an das Computerprogramm;
e) Verarbeitung der Farbwerte der Holzwerkstoffplatten der mindestens einen ersten Charge und der mindestens einen weiteren Charge in dem Computerprogramm und Anpassung der Farbwerte des Digitaldrucks für die mindestens eine erste Charge und/oder mindestens eine weiteren Charge;
f) Bedrucken mindestens einer Seite der Holzwerkstoffplatten mittels Digitaldrucktechnik unter Ausbildung einer Dekorschicht derart, dass keine Farbabweichungen zwischen den gedruckten Dekoren der Holzwerkstoffplatten der mindestens einen ersten Charge und jeder weiteren Charge auftreten.

3. Verfahren nach Anspruch 1 oder 2, wobei die Farbe der ersten pigmentierten Grundierung und der zweiten pigmentierten Grundierung ausgewählt ist aus weiß oder grau.

4. Verfahren nach einem der Ansprüche 1 bis 3, wobei die Farbe der ersten pigmentierten Grundierung grau ist und die Farbe der zweiten pigmentierten Grundierung weiß ist.

5. Verfahren nach einem der vorherigen Ansprüche, **dadurch gekennzeichnet dass** die Auftragsmenge der ersten pigmentierten Grundierung und/oder der zweiten pigmentierten Grundierung angepasst wird, um ein möglichst einheitliches Helligkeitsniveau des Trägermaterials zu erhalten.

6. Verfahren nach einem der vorherigen Ansprüche, **dadurch gekennzeichnet, dass** auf die zu bedruckende Seite der Holzwerkstoffplatte vor dem Bedrucken mindestens eine Grundierungsschicht umfassend mindestens ein Harz und/oder mindestens einen Lack aufgetragen wird, die anschließend angetrocknet und/oder angehärtet wird.

7. Verfahren nach Anspruch 6, **dadurch gekennzeichnet, dass** zur Grundierung eine wässrige Harzlösung und/oder eine strahlenhärtbare Spachtelmasse auf die zu bedruckende Seite der Holzwerkstoffplatte aufgetragen werden.

8. Verfahren nach einem der vorhergehenden Ansprüche, **dadurch gekennzeichnet, dass** zum Bedrucken der mindestens einen Seite der Holzwerkstoffplatte eine wasserbasierte, UV-basierte oder lösungsmittelbasierte Digitaldrucktinte verwendet wird.

9. Verfahren nach einem der vorhergehenden Ansprüche, **dadurch gekennzeichnet, dass** auf die Dekorschicht der Holzwerkstoffplatte nach dem Bedrucken mindestens eine Schutzschicht aufgetragen wird, die mindestens ein wasserverträgliches Harz, bevorzugt ein Formaldehyd-haltiges Harz, insbesondere bevorzugt Melamin-Formaldehyd-Harz, Harnstoff-Formaldehyd-Harz und/oder Melamin-Harnstoff-Formaldehyd-Harz umfasst.

10. Verfahren nach einem der vorhergehenden Ansprüche, **dadurch gekennzeichnet, dass** die auf die Dekorschicht der Holzwerkstoffplatte aufzutragende mindestens eine Schutzschicht mindestens einen strahlenhärtbaren Lack ausgewählt aus der Gruppe der Acrylate, modifizierte Acrylate und/oder Epoxide, oder mindestens ein Polyurethan ausgewählt aus der Gruppe enthaltend aliphatische Urethane oder eine Mischung aus mindestens einem strahlungshärtbaren Lack und mindestens einem Polyurethan umfasst.

11. Verfahren nach einem der Ansprüche 1 bis 8, **dadurch gekennzeichnet, dass** auf die Dekorschicht der Holzwerkstoffplatte nach dem Bedrucken mehrere Schutzschichten eines wasserverträgliches Harzes aufgetragen werden, weiter umfassend die Schritte:
- Aufbringen einer ersten Harzschicht, die abriebfeste Partikel enthält,
- Trocknen der ersten Harzschicht auf eine Restfeuchte von 3 % bis 6 %, und/oder
- Aufbringen einer zweiten Harzschicht, die Fasern enthält,
- Trocknen der zweiten Harzschicht auf eine Restfeuchte von 3 % bis 6 %, und/oder
- Aufbringen einer mindestens dritten Harzschicht, die Glaspartikel enthält,
- Trocknen der dritten Harzschicht auf eine Restfeuchte von 3% bis 6%; und
- Verpressen des Schichtaufbaus unter Druck- und Temperatureinfluss in einer Kurztakt-Presse zur Ausbildung eines Laminats;
wobei das Verpressen des Schichtaufbaus in der Kurztakt-Presse optional unter gleichzeitiger Ausbildung einer Struktur, die vorzugsweise dem Dekor der Holzwerkstoffplatte angepasst ist, mindestens auf der Oberseite des Laminats erfolgt.

12. Verfahren nach einem der vorherigen Ansprüche, **dadurch gekennzeichnet dass** die Farbabweichungen zwischen den gedruckten Dekoren der Holzwerkstoffplatten der mindestens einen ersten Charge und jeder weiteren Charge bzw. der mindestens einen ersten Holzwerkstoffplatte und jeder weiteren Holzwerkstoffplatte einer Charge so gering sind, dass sie kaum wahrnehmbar sind.

13. Holzwerkstoffplatte, insbesondere Holzfaserwerkstoffplatte, umfassend mindestens eine Schicht einer ersten pigmentierte Grundierung und mindestens eine Schicht einer zweiten pigmentierte Grundierung, wobei die erste pigmentierte Grundierung die Farbe Grau aufweist und die zweite pigmentierte Grundierung die Farbe Weiß aufweist.

14. Vorrichtung zur Erzeugung von Dekordrucken mit gleicher Qualität auf Trägermaterialien von mindestens einer ersten Charge und mindestens einer weiteren Charge, wobei die Vorrichtung folgende Elemente umfasst:
- mindestens ein Mittel zum Auftragen einer ersten pigmentierten Grundierung,
- mindestens ein Mittel zum Auftragen einer zweiten pigmentierten Grundierung,
- Mindestens ein Mittel zum Messen der Farbwerte des Trägermaterials,
- mindestens ein Mittel zum Anpassen der Farbdaten,
- mindestens eine Druckstraße mit mindestens einem Digitaldrucker zum Bedrucken mindestens einer Seite des Trägermaterials mittels Digitaldrucktechnik unter Ausbildung einer Dekorschicht derart, dass keine Farbabweichungen zwischen den gedruckten Dekoren des Trägermaterials der mindestens einen ersten Charge und jeder weiteren Charge auftreten.

15. Vorrichtung nach Anspruch 14, **gekennzeichnet durch** mindestens ein Mittel zum Aufbringen einer Schutzschicht auf das mit dem jeweiligen Druckdekor versehene Trägermaterial und/oder **durch** mindestens eine Kurztaktpresse zum Verpressen des mit dem Dekor versehenen Trägermaterials und der darauf angeordneten Schutzschicht.

## Claims

1. Method for printing wood material boards, in particular wood fiber material boards, by means of a digital printing process,
comprising the steps
a) applying at least one layer of a first pigmented primer to the wood material boards from one batch of the carrier material,
b) applying at least one layer of a second pigmented primer to the wood material boards,
c) measuring the color values of the individual wood material boards and forwarding the color values to a computer program;
d) processing the color values from the individual wood material boards in the computer program and adapting the color values of the digital print for the individual wood material boards;
e) printing at least one side of the wood material boards by means of digital printing technology, forming a decorative layer in such a way that no color deviations occur between the printed decorations of the individual wood material boards of a batch of the carrier material.

2. Method for printing wood material boards, in particular wood fiber material boards, by means of a digital printing process,
comprising the steps
a) applying at least one layer of a first pigmented primer to the wood material boards from the at least one first batch and the at least one further batch,
b) applying at least one layer of a second pigmented primer to the wood material boards from the at least one first batch and the at least one further batch,
c) measuring the color values of the wood material boards from the at least one first batch and forwarding the color values to a computer program;
d) measuring the color values of the wood material boards from the at least one further batch and forwarding the color values to the computer program;
e) processing the color values of the wood material boards from the at least one first batch and the at least one further batch in the computer program and adapting the color values of the digital print for the at least one first batch and/or at least one further batch;
f) printing at least one side of the wood material boards by means of digital printing technology, forming a decorative layer in such a way that no color deviations occur between the printed decorations of the wood material boards from the at least one first batch and each further batch.

3. Method according to Claim 1 or 2, wherein the color of the first pigmented primer and the second pigmented primer is selected from white or gray.

4. Method according to one of Claims 1 to 3, wherein the color of the first pigmented primer is gray and the color of the second pigmented primer is white.

5. Method according to one of the preceding claims, wherein the application quantity of the first pigmented primer and/or the second pigmented primer is adapted in order to obtain the most uniform lightness level of the carrier material.

6. Method according to one of the preceding claims, wherein, before the printing, at least one primer layer comprising at least one resin and/or at least one coating, which is subsequently dried and/or cured, is applied to the side of the wood material board that is to be printed.

7. Method according to Claim 6, wherein, for the priming, an aqueous resin solution and/or a radiation-curable filler compound is applied to the side of the wood material board that is to be printed.

8. Method according to one of the preceding claims, wherein a water-based, UV-based or solvent-based digital printing ink is used to print the at least one side of the wood material board.

9. Method according to one of the preceding claims, wherein, after the printing, at least one protective layer which comprises at least one water-compatible resin, preferably a formaldehyde-containing resin, in particular preferably melamine formaldehyde resin, urea formaldehyde resin and/or melamine urea formaldehyde resin, is applied to the decorative layer of the wood material board.

10. Method according to one of the preceding claims, wherein the at least one protective layer to be applied to the decorative layer of the wood material board comprises at least one radiation-curable coating selected from the group comprising acrylates, modified acrylates and/or epoxides, or comprises at least one polyurethane selected from the group containing aliphatic urethanes or a mixture of at least one radiation-curable coating and at least one polyurethane.

11. Method according to one of Claims 1 to 8, wherein following the printing, a plurality of protective layers of a water-compatible resin are applied to the decorative layer of the wood material board, further comprising the steps:
- applying a first resin layer, which contains abrasion-resistant particles,
- drying the first resin layer to a residual moisture content of 3% to 6%; and/or
- applying a second resin layer, which contains fibers,
- drying the second resin layer to a residual moisture content of 3% to 6%; and/or
- applying an at least third resin layer, which contains glass particles,
- drying the third resin layer to a residual moisture content of 3% to 6%; and
- pressing the layer structure under the influence of pressure and temperature in a short cycle press in order to form a laminate,
wherein the pressing of the layer structure in the short-cycle press is optionally carried out with the simultaneous formation of a structure which is preferably matched to the decoration of the wood material board, at least on the upper side of the laminate.

12. Method according to one of the preceding claims, wherein the color deviations between the printed decorations of the wood material boards from the at least one first batch and each further batch or the at least one first wood material board and each further wood material board from a batch are so low that they are barely perceptible.

13. Wood material board, in particular wood fiber material board, comprising at least one layer of a first pigmented primer and at least one layer of a second pigmented primer, wherein the first pigmented primer has the color gray and the second pigmented primer has the color white.

14. Apparatus for producing decorative prints of identical quality on carrier materials from at least one first batch and at least one further batch, wherein the apparatus comprises the following elements:
- at least one means for applying a first pigmented primer,
- at least one means for applying a second pigmented primer,
- at least one means for measuring the color values of the carrier material,
- at least one means for adapting the color data,
- at least one printing line having at least one digital printer for printing at least one side of the carrier material by means of digital printing technology, forming a decorative layer in such a way that no color deviations occur between the printed decorations of the carrier material from the at least one first batch and each further batch.

15. Apparatus according to Claim 14, **characterized by** at least one means for applying a protective layer to the carrier material provided with the respective printed decoration and/or by at least one short-cycle press for pressing the carrier material provided with the decoration and the protective layer arranged thereon.

## Revendications

1. Procédé d'impression de plaques de matériau ligneux, en particulier de plaques de matériau à base de fibres de bois, au moyen d'une opération d'impression numérique, le procédé comprenant les étapes qui consistent à :
a) appliquer au moins une couche d'une première couche de fond pigmentée sur les plaques de matériau ligneux d'un lot du matériau de support,
b) appliquer au moins une couche d'une deuxième couche de fond pigmentée sur les plaques de matériau ligneux,
c) mesurer les valeurs de couleur des plaques de matériau ligneux individuelles et transmettre les valeurs de couleur à un programme informatique,
d) traiter les valeurs de couleur des plaques de matériau ligneux individuelles dans le programme informatique et adapter les valeurs de couleur de l'impression numérique aux plaques de matériau ligneux individuelles,
e) imprimer au moins une face des plaques de matériau ligneux par une technique d'impression numérique en y formant une couche décorative de telle sorte qu'aucun écart de couleur ne survienne entre les décors imprimés des plaques de matériau ligneux individuelles d'un lot du matériau de support.

2. Procédé d'impression de plaques de matériau ligneux, en particulier de plaques de matériau à base de fibres de bois, au moyen d'une opération d'impression numérique, le procédé comprenant les étapes qui consistent à :
a) appliquer au moins une couche d'une première couche de fond pigmentée sur les plaques de matériau ligneux de l'au moins un premier lot et de l'au moins un lot supplémentaire,
b) appliquer au moins une couche d'une deuxième couche de fond pigmentée sur les plaques de matériau ligneux de l'au moins un premier lot et de l'au moins un lot supplémentaire,
c) mesurer les valeurs de couleur des plaques de matériau ligneux de l'au moins un premier lot et transmettre les valeurs de couleur à un programme informatique ;
d) mesurer les valeurs de couleur des plaques de matériau ligneux de l'au moins un lot supplémentaire et transmettre les valeurs de couleur au programme informatique ;
e) traiter les valeurs de couleur des plaques de matériau ligneux de l'au moins un premier lot et de l'au moins un lot supplémentaire dans le programme informatique et adapter les valeurs de couleur de l'impression numérique à l'au moins un premier lot et/ou à l'au moins un lot supplémentaire ;
f) imprimer au moins une face des plaques de matériau ligneux par une technique d'impression numérique en y formant une couche décorative de telle sorte qu'aucun écart de couleur ne survienne entre les décors imprimés des plaques de matériau ligneux de l'au moins un premier lot et de chaque lot supplémentaire.

3. Procédé selon la revendication 1 ou 2, dans lequel la couleur de la première couche de fond pigmentée et de la deuxième couche de fond pigmentée est choisie blanche ou grise.

4. Procédé selon l'une quelconque des revendications 1 à 3, dans lequel la couleur de la première couche de fond pigmentée est grise et la couleur de la deuxième couche de fond pigmentée est blanche.

5. Procédé selon l'une des revendications précédentes, **caractérisé en ce que** la quantité appliquée de la première couche de fond pigmentée et/ou de la deuxième couche de fond pigmentée est adaptée pour obtenir un niveau aussi uniforme que possible de clarté sur le matériau de support.

6. Procédé selon l'une des revendications précédentes, **caractérisé en ce qu'**au moins une couche de fond comprenant au moins une résine et/ou au moins un vernis est appliquée sur la face à imprimer de la plaque en matériau ligneux avant l'impression, et est ensuite séchée et/ou durcie.

7. Procédé selon la revendication 6, **caractérisé en ce que** pour la couche de fond, on applique une solution aqueuse de résine et/ou une pâte d'enduction durcissable par rayonnement sur la face à imprimer de la plaque en matériau ligneux.

8. Procédé selon l'une des revendications précédentes, **caractérisé en ce que** pour imprimer la ou les faces de la plaque en matériau ligneux, on utilise une encre d'impression numérique à base d'eau, à base d'UV ou à base de solvant.

9. Procédé selon l'une des revendications précédentes, **caractérisé en ce qu'**après l'impression, au moins une couche de protection qui comporte au moins une résine compatible avec l'eau, de préférence une résine contenant du formaldéhyde, de manière particulièrement préférable une résine de mélamine et de formaldéhyde, une résine d'urée et de formaldéhyde ou une résine de mélamine, d'urée et de formaldéhyde, est appliquée sur la couche décorative de la plaque en matériau ligneux.

10. Procédé selon l'une des revendications précédentes, **caractérisé en ce que** la ou les couches de protection à appliquer sur la couche décorative de la plaque en matériau ligneux comportent au moins un vernis durcissable par rayonnement, sélectionné dans l'ensemble constitué des acrylates, des acrylates modifiés et/ou des époxys, ou au moins un polyuréthane sélectionné dans l'ensemble contenant les uréthanes aliphatiques ou un mélange d'au moins un vernis durcissable par rayonnement et d'au moins un polyuréthane.

11. Procédé selon l'une des revendications 1 à 8, **caractérisé en ce qu'**après l'impression, plusieurs couches de protection en résine compatible avec l'eau sont appliquées sur la couche décorative de la plaque de matériau ligneux, le procédé comportant en outre les étapes qui consistent à :
appliquer une première couche de résine qui contient des particules résistant à l'abrasion,
sécher la première couche de résine à une teneur résiduelle en humidité de 3 % à 6 % et/ou
appliquer une deuxième couche de résine qui contient des fibres,
sécher la deuxième couche de résine à une teneur résiduelle en humidité de 3 % à 6 % et/ou
appliquer au moins une troisième couche de résine qui contient des particules de verre,
sécher la troisième couche de résine à une teneur résiduelle en humidité de 3 % à 6 % et
comprimer la structure stratifiée sous l'action de la pression et de la chaleur dans une presse à cadence rapide pour former un stratifié,
la compression de la structure stratifiée dans la presse à cadence rapide s'effectuant de façon facultative en formant simultanément une structure qui est de préférence adaptée au décor de la plaque de matériau ligneux au moins sur la face supérieure du stratifié.

12. Procédé selon l'une quelconque des revendications précédentes, **caractérisé en ce que** les écarts de couleur entre les décors imprimés des plaques de matériau ligneux de l'au moins un premier lot et de chaque lot supplémentaire ou de l'au moins une première plaque de matériau ligneux et de chaque plaque de matériau ligneux supplémentaire d'un lot sont si faibles qu'ils sont à peine perceptibles.

13. Plaque de matériau ligneux, en particulier plaque de matériau à base de fibres de bois, comprenant au moins une couche d'une première couche de fond pigmentée et au moins une couche d'une deuxième couche de fond pigmentée, la première couche de fond pigmentée présentant la couleur grise et la deuxième couche de fond pigmentée présentant la couleur blanche.

14. Dispositif de formation d'impression décorative de qualité constante sur des matériaux de support d'au moins un premier lot et d'au moins un autre lot, le dispositif comportant les éléments suivantes :
au moins un moyen d'application d'une première couche de fond pigmentée,
au moins un moyen d'application d'une deuxième couche de fond pigmentée,
au moins un moyen de mesure des valeurs de couleur des matériaux de support,
au moins un moyen d'adaptation des données de couleurs,
au moins une ligne d'impression présentant au moins une imprimante numérique qui imprime au moins une face du matériau de support par une technique d'impression numérique en y formant une couche décorative, de telle sorte qu'aucun écart de couleur ne survienne entre les décors imprimés sur le matériau de support du ou des premiers lots et de chaque autre lot.

15. Dispositif selon la revendication 14, **caractérisé par** au moins un moyen d'application d'une couche de protection sur le matériau de support doté du décor imprimé respectif et/ou par au moins une presse à cadence rapide qui comprime le matériau de support doté du décor et la couche de protection qui y est disposée.
